(19) Europäisches Patentamt
European Patent Office
Office européen des brevets

(11) Veröffentlichungsnummer: **0 221 313**
**A1**

(12) # EUROPÄISCHE PATENTANMELDUNG

(21) Anmeldenummer: 86113018.5

(22) Anmeldetag: 22.09.86

(51) Int. Cl.[4]: C 08 L 11/00
C 08 L 23/28, C 08 K 5/37
C 08 K 5/46
//(C08L11/00, 23:28)

(30) Priorität: 02.10.85 DE 3535137

(43) Veröffentlichungstag der Anmeldung:
13.05.87 Patentblatt 87/20

(84) Benannte Vertragsstaaten:
DE FR GB IT

(71) Anmelder: BAYER AG
Konzernverwaltung RP Patentabteilung
D-5090 Leverkusen 1 Bayerwerk(DE)

(72) Erfinder: Michel, Werner, Dr.
Hans-Bierling-Strasse 13
D-8089 Emmering(DE)

(54) **Kautschukmischungen und daraus hergestellte Covulkanisate.**

(57) Mischungen aus unvernetztem CR und unvernetztem CM im Gewichtsverhältnis 30:70 bis 90:10 führen zu Covulkanisaten mit hervorragenden Eigenschaften, insbesondere Ozonbeständigkeit ohne den Zusatz von Ozonschutzmitteln, wenn man als Vernetzer ein Thiadiazol-Derivat oder ein Di- oder Trithiocyanursäure-Derivat einsetzt und die Anwesenheit von Zinkverbindungen vermeidet.

EP 0 221 313 A1

Croydon Printing Company Ltd.

BAYER AKTIENGESELLSCHAFT 5090 Leverkusen, Bayerwerk
Konzernverwaltung RP
Patentabteilung Jo/bo-c

Kautschukmischungen und daraus hergestellte Covulkanisate

Die Erfindung betrifft Kautschukmischungen aus unvernetztem CR und unvernetzem CM und einem speziellen Vernetzungssystem sowie die durch Erhitzen dieser Kautschukmischungen hergestellten Covulkanisate.

Es ist bekannt, daß unvernetzter Polychloropren-Kautschuk (CR) eine ausgezeichnete Konfektionsklebrigkeit, eine sehr gute Haftung zum verstärkenden Gewebe und sehr gute Stoßelastizität aufweist. CR eignet sich daher zur Herstellung hochwertiger Schläuche und dynamisch hochbelastbarer Artikel, beispielsweise Faltenbälgen. Allerdings besteht der Wunsch, die an sich gute dynamische Belastbarkeit noch zu verbessern. Andererseits ist CR durch Ozon angreifbar und muß daher mit einem Ozonschutzmittel versehen werden. Dies macht den Einsatz von CR für öl-, und treibstofführende Schläuche weniger geeignet, da das Öl bzw. der Treibstoff im Laufe des Gebrauchs das Ozonschutzmittel aus dem vulkanisierten Polychloropren herauslöst und damit den Schutz gegen den Angriff des Ozons abbaut.

Chloriertes Polyethylen (CM) ist außerordentlich beständig gegen den Angriff von Ozon und zeichnet sich durch besonders hohe dynamische Belastbarkeit aus; so ist Ermüdungsrißbildung von CM außerordentlich gering. Andererseits zeigt CM nur eine geringe Konfektionsklebrigkeit, eine schlechte Haftung zum verstärkenden Gewebe und eine geringe Stoßelastizität. CM mit besonders hohem Chloranteil zeigt überdies eine unbefriedigende Kälteflexibilität. Zur Übertragung der erwünschten Eigenschaften von einem Polymer auf ein anderes werden häufig Mischungen aus den Polymeren hergestellt. Die bestmögliche Eigenschaftskombination wird jedoch erfahrensgemäß nur dann erhalten, wenn die Polymere miteinander verträglich und vernetzbar sind.

Zur Herstellung hochwertiger Artikel, beispielsweise ozonfester Schläuche, die keine Ozonschutzmittel enthalten sollen, sowie dynamisch hochbelastbarer Artikel bestand daher die Aufgabe, Covulkanisate aus den beiden Kautschuktypen herzustellen. Diese Aufgabe konnte mit den üblichen Vernetzungssystemen wie Thioharnstoffen, Zinksalzen oder Schwefelsystemen nicht gelöst werden.

So wirkt beispielsweise das System Diethylthioharnstoff/Schwefel bei der Vernetzung von CR und CM nach GB-A-21 25 731 zu langsam, muß in hohen Dosierungen angewandt werden und führt zur Korrosion von Metalleinlagen.

Es wurde nun gefunden, daß sich Mischungen aus unvernetztem CR und unvernetztem CM zu Covulkanisaten mit ausge-

zeichneten Eigenschaften vernetzen lassen, wenn man als Vernetzer ein Thiadiazol-Derivat oder ein Di- oder Trithiocyanursäure-Derivat verwendet und Zinksalze vermeidet.

Gegenstand der Erfindung sind daher Mischungen aus unvernetztem CR und unvernetztem CM im Gewichtsverhältnis 30:70 bis 90:10, vorzugsweise 50:50 bis 80:20, enthaltend als Vernetzer ein Thiadiazol-Derivat oder ein Trithiocyanursäure-Derivat sowie weitere übliche Mischungsbestandteile, die frei von Zinkverbindungen sind.

Ein weiterer Gegenstand der Erfindung sind Covulkanisate aus den vorstehend beschriebenen Mischungen. Die Covulkanisate werden dadurch hergestellt, daß man die vorstehend genannten Mischungen Temperaturen von 20 bis 220° C aussetzt, wobei die übliche Vulkanisation durch Erhitzen der Mischungen auf Temperaturen von 80 bis 220° C als auch die sogenannte "Selbstvulkanisation", bei der man die Mischungen der Umgebungswärme von 20 bis 80° C aussetzt, zur Anwendung kommen können.

Geeignete CR-Kautschuke sind Homo- und Copolymerisate des Chloroprens, wobei als Comonomere bis zu 6 Gew.-% 2,3-Dichlorbutadien, bis zu 1 Gew.-% Schwefel, bis zu 10 Gew.-% Butadien, bis zu 50 Gew.-% Acrylnitril, $C_1$-$C_4$-Alkylacrylate und -methacrylate und bis zu 10 Gew.-% Styrol, jeweils bezogen auf Gesamtmonomermenge, in Frage kommen. Die Gesamtmenge an Comonomeren überschreitet bei Verwendung von Acrylnitril und (Meth)acrylaten 50 Gew.-% nicht, bei Abwesenheit dieser Comonomere 10 Gew.-% nicht.

Die CR-Kautschuke weisen insbesondere Mooneyviskositäten ML 1+4/100° C von 20 bis 130 ME auf.

Geeignete CM-Kautschuke sind solche mit einem Chlorgehalt von 25 bis 45 Gew.-% und Mooneyviskositäten ML 1+4/120° C von 30 bis 130 ME.

Bevorzugte Vernetzer entsprechen den Formeln

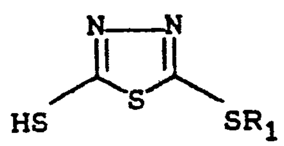

worin $R_1$ Wasserstoff oder Benzoyl bedeutet, bzw.

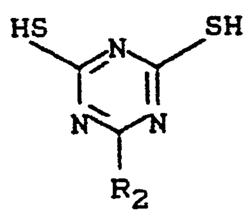

worin $R_2$ SH oder Di-$C_1$-$C_8$-alkylamino bedeutet.

Die Vernetzer werden in Mengen von 0,5 bis 5 Gew.-%, bezogen auf Gesamtkautschuktrockensubstanz, eingesetzt.

Weitere übliche Mischungsbestandteile sind z.B. Füllstoffe, Weichmacher, Alterungsschutzmittel, Verarbeitungshilfsmittel, Pigmente und Säurefänger, die jedoch nicht zwingend in der Mischung vorhanden sein müssen.

Bevorzugt wird die Vulkanisation bei 150 bis 200$^{\circ}$C durchgeführt.

Beispiele

In den folgenden Beispielen haben die Abkürzungen folgende Bedeutung:

CR I : Chloroprencopolymerisat mit 4 bis 8 Gew.-% Dichlorbutadiengehalt; Mooney-Viskosität ML 1+4/100°C = 45 ME.

CR II: Chloroprenhomopolymerisat mit mittelstarker Kristallisationsneigung; ML 1+4/100°C = 45 ME

CM I: Chloriertes Polyethylen mit 37 Gew.-% Chlor; Mooney-Viskosität ML 1+4/120°C = 85 ME,

CM II: Chloriertes Polyethylen mit 31 Gew.-% Chlor, ML 1+4/120°C = 75 ME

CM III: Chloriertes Polyethylen mit 42 Gew.-% Chlor, ML 1+4/120°C = 85 ME

CM IV: Chloriertes Polyethylen mit 25 Gew.-% Chlor, ML 1+4/120°C = 85 ME

ASM I: Alterungsschutzmittel octyliertes Diphenylamin.

Beispiel 1

Es wurden Kautschukmischungen aus chloriertem Polyethylen und Polychloropren ohne Ozonschutzmittel hergestellt, vulkanisiert und geprüft. Die nachstehende Tabelle zeigt die Mischungsbestandteile (Gew.-Teile) und Ergebnisse.

Die Mischungen wurden in einem Laborkneter mit Stempel und Schaufeln mit ineinandergreifender Symmetrie bei einem Füllgrad von 100 %, einer Drehzahl von 24 Upm und einer Vorwärmtemperatur von 60° C hergestellt.

| | a | b | c | d | e | f |
|---|---|---|---|---|---|---|
| CR I | 100 | 75 | 50 | 25 | 100 | 50 |
| CM I | - | 25 | 50 | 75 | - | 50 |
| MgO | 4 | 4 | 4 | 4 | 4 | 4 |
| Stearinsäure | 1 | 1 | 1 | 1 | 1 | 1 |
| Paraffinwachs | 2 | 2 | 2 | 2 | 2 | 2 |
| $SiO_2$ | 10 | 10 | 10 | 10 | 10 | 10 |
| Ruß N 762 | 40 | 40 | 40 | 40 | 40 | 40 |
| China-Clay E | 50 | 50 | 50 | 50 | 50 | 50 |
| ASM I | 5 | 5 | 5 | 5 | 5 | 5 |
| **Gemisch aus Thio- und Carbonsäureestern (Weichmacher)** | 30 | 30 | 30 | 30 | 30 | 30 |
| **Zinksulfid** | 3 | - | - | - | - | 3 |
| **2-Mercaptoimidazolin** | 1,5 | - | - | - | - | 1,5 |
| Dibenzothiazyldisulfid | 0,5 | - | - | - | - | 0,5 |
| Benzoylthiadiazol | - | 2 | 2 | 2 | 2 | - |
| Distearoylpoly-ethylenpolyamin | - | 2,5 | 2,5 | 2,5 | 2,5 | - |
| | 247,0 | 246,5 | 246,5 | 246,5 | 246,5 | 247,0 |

| | a | b | c | d | e | f |
|---|---|---|---|---|---|---|
| Dichte (g/cm³) | 1,475 | 1,449 | 1,442 | 1,430 | 1,457 | 1,458 |
| Kneterbatchtemperatur (°C) | 105 | 110 | 107 | 114 | 110 | 120 |
| **Mischungseigenschaften:** | | | | | | |
| ML-1+4/100°C (ME) | 25 | 29 | 39 | 47 | 25 | 39 |
| **Vulkameter bei 170°C** | | | | | | |
| F min (N) | 0,5 | 0,8 | 1,1 | 1,3 | 0,7 | 0,9 |
| F max (N) | 33 | 29 | 28 | 28 | 30 | 16 |
| T10 (min) | 1,5 | 1,3 | 1,3 | 1,5 | 1,2 | 1,6 |
| T50 (min) | 3,9 | 2,7 | 2,7 | 3,0 | 2,4 | 4,1 |
| T80 (min) | 8,9 | 5,1 | 4,8 | 5,4 | 4,5 | 12,0 |
| T90 (min) | 14,3 | 7,4 | 6,9 | 7,6 | 6,8 | 19,1 |
| T80-T10 (min) | 7,4 | 3,8 | 3,5 | 3,9 | 3,3 | 10,4 |

Vulkanisateigenschaften: 2 mm Platte, ISO-Stab 2 bzw. 4 mm Klappen

| | | | | | | | |
|---|---|---|---|---|---|---|---|
| F (MPa) | $170^0$ C/10' | 11,2 | 10,6 | 12,1 | 12,7 | 12,0 | 8,4 |
| | 20' | 11,1 | 10,5 | 11,8 | 13,5 | 11,7 | 9,2 |
| | 30' | 11,7 | 10,6 | 12,9 | 13,4 | 11,9 | 9,5 |
| D (%) | 10' | 395 | 500 | 545 | 560 | 455 | 580 |
| | 20' | 390 | 470 | 515 | 560 | 435 | 570 |
| | 30' | 385 | 450 | 510 | 545 | 430 | 535 |
| S100 (MPa) | 10' | 2,6 | 2,0 | 2,0 | 2,3 | 1,9 | 2,2 |
| | 20' | 2,5 | 2,0 | 2,1 | 2,3 | 1,9 | 2,3 |
| | 30' | 2,6 | 2,1 | 2,2 | 2,5 | 1,9 | 2,3 |
| S300 (MPa) | 10' | 7,3 | 5,6 | 5,4 | 5,2 | 6,4 | 4,3 |
| | 20' | 7,3 | 5,8 | 5,7 | 5,7 | 6,6 | 4,8 |
| | 30' | 7,9 | 6,1 | 6,4 | 6,4 | 6,7 | 5,0 |
| H (Shore A) | 10' | 61 | 59 | 62 | 64 | 56 | 61 |
| | 20' | 62 | 61 | 62 | 65 | 57 | 61 |
| | 30' | 61 | 60 | 63 | 65 | 57 | 62 |
| Rückpralleastizität (%) | 10' | 42 | 36 | 32 | 31 | 38 | 35 |
| | 20' | 42 | 35 | 31 | 30 | 37 | 34 |
| | 30' | 41 | 35 | 33 | 33 | 38 | 35 |
| Weiterreißfestigkeit DIN 53 515 | 10' | 12 | 15 | 17 | 20 | 12 | 20 |
| | 20' | 13 | 14 | 15 | 19 | 12 | 18 |
| | 30' | 11 | 14 | 15 | 17 | 12 | 18 |
| CS (%) 22 h/$100^0$ C | 10' | 45 | 31 | 29 | 32 | 26 | 58 |
| | 20' | 29 | 24 | 24 | 24 | 21 | 51 |
| | 30' | 26 | 22 | 23 | 23 | 17 | 50 |

| | | | | | | | |
|---|---|---|---|---|---|---|---|
| **De Mattia Rißbildung bei RT (Stufe 3 (Vulk. 20'/170° C)** | | | | | | | |
| | Probe 1 | 22 | 48 | >500 | >500 | 24 | 145 |
| | 2 | 28 | 68 | >500 | >500 | 16 | 130 |
| (Kilozyklen) | 3 | 52 | 97 | >500 | >500 | 18 | 150 |
| | 4 | 38 | 63 | >500 | >500 | 22 | 140 |
| | x | 35 | 69 | >500 | >500 | 20 | 141 |
| **Ozonprüfung bei 40° C, 200 pphm und 60 % Dehnung (Vulk. 20'/170° C)** | | | | | | | |
| | nach 24 h | 6/1 | o/o | o/o | o/o | 6/2 | o/o |
| | 48 h | 6/2 | o/o | o/o | o/o | 5/3 | o/o |
| | 96 h | 5/3 | o/o | o/o | o/o | 5/3 | o/o |
| | 168 h | 4/4 | o/o | o/o | o/o | 4/4 | o/o |
| **Lagerung in Heißluft bei 125° C (Vulk. 20'/170° C)** | | | | | | | |
| | 0d | 11,2 | 10,5 | 11,8 | 13,5 | 11,7 | 9,2 |
| Δ F (%) | 3d | -2 | -11 | -1 | -2 | -20 | +34 |
| | 7d | +1 | -13 | -9 | -12 | -26 | 121 |
| | 14d | +18 | -16 | +4 | -7 | -42 | zerstört |
| | 0d | 390 | 470 | 515 | 560 | 435 | 570 |
| Δ D (%) | 3d | -33 | -37 | -31 | -21 | -41 | -86 |
| | 7d | -64 | -70 | -54 | -41 | -59 | -95 |
| | 14d | -95 | -98 | -92 | -58 | -98 | zerstört |
| | 0d | 62 | 61 | 62 | 65 | 57 | 61 |
| Δ H (Shore A) | 3d | +23 | +22 | +23 | +21 | +26 | +34 |
| | 7d | +30 | +27 | +29 | +26 | +34 | +37 |
| | 14d | +35 | +35 | +34 | +29 | +39 | verhärtet |

Beispiel 2

Die Durchführung erfolgte analog Beispiel 1 mit der nachstehend aufgeführten Mischung und ergab die darauf folgenden Ergebnisse:

| | |
|---|---|
| CR II | 50 |
| CM I | 50 |
| MgO | 4 |
| Stearinsäure | 1 |
| Ruß N 550 | 40 |
| Thiodiglykolsäure-di-2-ethyhexylester | 10 |
| Aromatisches Öl (Weichmacher) | 10 |
| ASM I | 2 |
| Trithiocyanursäure | 1 |
| Cyclohexylethylamin | 1,5 |
| | 169,5 |
| Dichte (g/cm$^3$) | 1,302 |
| Kneterbatchtemperatur (°C) | 138 |
| Mischungseigenschaften | |
| ML-1+4/100° C (ME) | 63 |

Vulkameter bei 170° C

| | |
|---|---|
| F min (N) | 2,4 |
| F max (N) | 34 |
| T10 (min) | 1,0 |
| T50 (min) | 2,4 |
| T80 (min) | 5,1 |
| T90 (min) | 7,4 |
| δT80-T10 (min) | 4,1 |

Vulkanisateigenschaften: 2 mm Platte, Iso-Stab 2 bzw. 4 mm Klappen

| | | |
|---|---|---|
| F(MPa) | 170° C/20' | 18,9 |
| D(%) | 20' | 330 |
| S100 (MPa) | 20' | 4,2 |
| S300 (MPa) | 20' | 17,4 |
| H (Shore A) | 20' | 68 |
| Weiterreißfestigkeit (N/mm) DIN 53 515 | 20' | 11 |

| | | |
|---|---|---|
| CS (%) 22 h/100° C | 20' | 12 |

De Mattia Rißbildung bei RT Stufe 3 (Vulk.20'/170° C)

| | | |
|---|---|---|
| | Probe 1 | › 500 |
| | 2 | 257 |
| (Kilozyklen) | 3 | 38 |
| | 4 | › 500 |

Ozonprüfung bei 40° C, 200 pphm und 60 % Dehnung (Vulk. 20'/170° C

| | |
|---|---|
| nach 24 h | 0/0 |
| 48 h | 0/0 |
| 96 h | 0/0 |
| 168 h | 0/0 |

Lagerung in Heißluft bei 125° C (Vulk. 20'/170° C)

| | | |
|---|---|---|
| | 0d | 18,9 (prozentualer Abfall) |
| ΔF(%) | 3d | 18,8 (1) |
| | 7d | 16,8 (11) |
| | 14d | 11,8 (38) |
| | 0d | 330 (prozentualer Abfall) |
| ΔD(%) | 3d | 325 (2) |
| | 7d | 245 (26) |
| | 14d | 55 (83) |

| | | |
|---|---|---|
| | 0d | 68 (Änderung) |
| ΔH (Shore A) (%) | 3d | 77 (9) |
| | 7d | 82 (14) |
| | 14d | 91 (23) |

Beispiel 3

Analog Beispiel 1 wurden die nachstehenden Mischungen hergestellt, geprüft und vulkanisiert.

| | | |
|---|---|---|
| CR I | 100 | 60 |
| CM I | - | 40 |
| MgO | 4 | 4 |
| Stearinsäure | 1 | 1 |
| Paraffinwachs | 2 | 2 |
| $SiO_2$ | 20 | 20 |
| Ruß N 762 | 40 | 40 |
| Trimellithsäure | 20 | 20 |
| Benzoylthiadiaol | 1,0 | 1,7 |
| Distearoylaminopoly-ethylenpolyamin | 2,0 | 2,7 |
| | 190,0 | 191,4 |

| | | |
|---|---|---|
| Dichte | 1,376 | 1,358 |
| Kneterbatchtemperatur ($^{o}C$) | 132 | 132 |
| Ml 1+4 / 100$^{o}$C (ME) | 97 | 153 |

Vulkanisateigenschaften: ISO-Ring 1
Vulkanisation bei 180° C,

| | 30' | 10' |
|---|---|---|
| F (MPa) | 11 | 13 |
| D (%) | 365 | 355 |
| H (Shore A) | 57 | 64 |
| CS (%) 22 h /100° C | 14 | 17 |
| Ozonprüfung, 200 pphm, 40° C, 60 % Dehnung nach 168 h | 4/4 | 0/0 |
| DeMattia Rißbildung bei RT (Stufe 3) (Kilozyklen) | 6 | 40 |

Beispiel 4

Analog Beispiel 1 wurden die nachfolgenden Mischungen hergestellt, geprüft und vulkanisiert. Die erste Mischung belegt den nachteiligen Einfluß den ZnO.

| | | | | | | |
|---|---|---|---|---|---|---|
| CR I | 56 | 56 | 56 | 56 | 63 | 56 |
| CM II | - | - | - | - | - | 11 |
| CM I | 44 | 44 | 44 | 44 | 37 | 11 |
| CM III | - | - | - | - | - | 11 |
| CM IV | - | - | - | - | - | 11 |
| MgO | 4 | 4 | 4 | 4 | 4 | 4 |
| Stearinsäure | 1 | - | - | - | - | 1 |
| Paraffinwuchs | 2 | - | - | - | - | 2 |
| $SiO_2$ | 10 | 10 | 10 | 10 | 10 | 10 |
| Ruß N 762 | 40 | 40 | 40 | 40 | 40 | 40 |
| Kaolin | 50 | 50 | 50 | 50 | 50 | 50 |

| | | | | | | |
|---|---|---|---|---|---|---|
| Octyliertes Diphenylamin | 5 | - | - | - | - | 5 |
| Thiodiglykolsäureester | 30 | 30 | 30 | 30 | 30 | 30 |
| ZnO | 5 | - | - | - | - | - |
| Trithiocyanursäure | - | - | - | 1,0 | 1,0 | - |
| Cyclohexylethylamin | - | - | - | - | 1,2 | - |
| Benzoylthiadiazol | 2,0 | 2,0 | 2,0 | - | - | 2,0 |
| Distearoylamino-polyethylenpolyamin | 2,5 | 2,5 | 2,5 | - | - | 2,5 |
| Di-o-tolylguanidin | - | 2,0 | - | 2,0 | - | - |
| Acrolein-Anilin-Kondensationsprodukt | - | - | 1,0 | - | - | - |
| | 251,5 | 240,5 | 239,5 | 237,0 | 236,2 | 246,5 |
| Dichte | 1,469 | 1,472 | 1,474 | 1,481 | 1,482 | 1,443 |
| Ml 1+4/100° C (MB) | 36 | 60 | 50 | 62 | 65 | 35 |
| Vulkanisation (min) bei 180° C | 20 | 5 | 15 | 30 | 15 | 15 |
| F (MPa) | 9 | 12 | 11 | 11 | 12 | 10 |
| D (%) | 610 | 325 | 325 | 325 | 275 | 445 |
| Härte (Shore A) | 61 | 67 | 66 | 68 | 71 | 66 |
| C.S. (%) 22 h/100° C | 36 | 32 | 20 | 19 | 18 | 22 |

Ozonprüfung bei 40° C, 200 pphm, 60 % Dehnung

| | | | | | | |
|---|---|---|---|---|---|---|
| nach 168 h | 0/0 | 0/0 | 0/0 | 0/0 | 5/1 | 3/2 |

## Patentansprüche

1. Mischungen aus unvernetztem CR und unvernetztem CM im Gewichtsverhältnis 30:70 bis 90:10, enthaltend als Vernetzer ein Thiadiazol-Derivat oder ein Di- oder Trithiocyanursäure-Derivat sowie weitere übliche Mischungsbestandteile, die frei von Zinkverbindungen sind.

2. Mischungen gemäß Anspruch 1, enthaltend CR und CM im Gewichtsverhältnis 50:50 bis 80:20.

3. Mischungen gemäß Anspruch 1, wobei CR eine Mooney-Viskosität ML 1+4/100° C von 20 bis 130 und CM eine Mooney-Viskosität ML 1+4/120° C von 30 bis 130 aufweisen.

4. Mischungen nach Anspruch 1, wobei die Vernetzer den Formeln

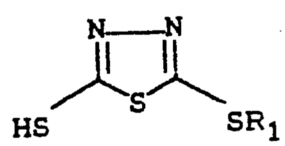

und

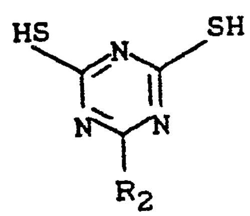

entsprechen, worin

$R_1$ Wasserstoff oder Benzoyl und
$R_2$ SH oder Di-$C_1$-$C_8$-alkylamino bedeuten.

5. Mischungen nach Anspruch 1, wobei die Vernetzer in Mengen von 0,5 bis 5 Gew.-%, bezogen auf Gesamtkautschuktrockensubstanz, eingesetzt werden.

6. Covulkanisate aus den Mischungen gemäß Ansprüchen 1 und 2.

7. Verfahren zur Herstellung von Covulkanisaten gemäß Anspruch 3, dadurch gekennzeichnet, daß man die Mischungen gemäß Ansprüchen 1 oder 2 Temperaturen von 20 bis 220°C aussetzt.

8. Verfahren nach Anspruch 7, dadurch gekennzeichnet, daß man die Vulkanisation bei 150 bis 200°C durchführt.

Europäisches Patentamt

**EUROPÄISCHER RECHERCHENBERICHT**

0221313

Nummer der Anmeldung

EP 86 11 3018

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | FR-A-2 356 687 (HERCULES INC.) * Anspruch 1; Seite 6, Zeilen 10-21 * --- | 1-8 | C 08 L 11/00<br>C 08 L 23/28<br>C 08 K 5/37<br>C 08 K 5/46 //<br>(C 08 L 11/00<br>C 08 L 23:28 ) |
| D,A | GB-A-2 125 731 (DUNLOP) * Anspruch 3; Seite 1, Zeilen 41-45 * --- | 2 | |
| A | US-A-2 804 450 (AMERICAN CYANAMID) * Anspruch 1 * --- | 4,5 | |
| A | DE-A-2 845 125 (HERCULES INC.) * Anspruch 4 * ----- | 4,5 | |
| | | | RECHERCHIERTE SACHGEBIETE (Int. Cl.4) |
| | | | C 08 L<br>C 08 K |

Der vorliegende Recherchenbericht wurde für alle Patentansprüche erstellt.

| Recherchenort | Abschlußdatum der Recherche | Prüfer |
|---|---|---|
| DEN HAAG | 27-01-1987 | VAN HUMBEECK F.W.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82